(19) Europäisches Patentamt
European Patent Office
Office européen des brevets

(11) **EP 2 767 797 B1**

(12) **EUROPÄISCHE PATENTSCHRIFT**

(45) Veröffentlichungstag und Bekanntmachung des Hinweises auf die Patenterteilung:
**23.10.2019   Patentblatt 2019/43**

(51) Int Cl.:
***G01B 9/02*** (2006.01)

(21) Anmeldenummer: **13199675.3**

(22) Anmeldetag: **27.12.2013**

(54) **Niedrigkohärenzinterferometer und Verfahren zur ortsaufgelösten optischen Vermessung des Oberflächenprofils eines Objekts**

Low coherence interferometer and method for spatially resolved optical measurement of the surface profile of an object

Interféromètre à faible cohérence et procédé de mesure optique à résolution spatiale du profil de surface d'un objet

(84) Benannte Vertragsstaaten:
**AL AT BE BG CH CY CZ DK EE ES FI FR GB GR HR HU IE IS IT LI LT LU LV MC MK MT NL NO PL PT RO RS SE SI SK SM TR**

(30) Priorität: **13.02.2013   DE 102013202349**

(43) Veröffentlichungstag der Anmeldung:
**20.08.2014   Patentblatt 2014/34**

(73) Patentinhaber: **Polytec GmbH**
**76337 Waldbronn (DE)**

(72) Erfinder:
• **Boedecker, Sebastian**
**76137 Karlsruhe (DE)**
• **Rembe, Christian**
**76337 Waldbronn (DE)**
• **Giesen, Moritz**
**76275 Ettlingen (DE)**

(74) Vertreter: **Lemcke, Brommer & Partner**
**Patentanwälte Partnerschaft mbB**
**Siegfried-Kühn-Straße 4**
**76135 Karlsruhe (DE)**

(56) Entgegenhaltungen:
JP-A- 2001 141 652       US-A- 5 886 786
US-A1- 2009 153 839

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Kohärenzrasterinterferometer zur ortsaufgelösten optischen Vermessung von Höhengeometriedaten eines Objekts gemäß Oberbegriff des Anspruchs 1 sowie ein Verfahren zur ortsaufgelösten Vermessung der Höhengeometriedaten eines Objekts mittels eines Kohärenzrasterinterferometers gemäß Oberbegriff des Anspruchs 14.

Die ortsaufgelöste optische Vermessung der Höhengeometriedaten eines Objekts mittels eines Kohärenzrasterinterferometers ist an sich bekannt:
Hierbei wird ein von einer Lichtquelle erzeugter Lichtstrahl mittels eines Interferometers in einen Mess- und Referenzstrahl aufgespalten, der Messstrahl flächig auf das zu vermessende Objekt geleitet und der von dem Objekt zumindest teilweise reflektierte und/oder gestreute Messstrahl wird auf einer Detektionsfläche einer Kamera mit dem Referenzstrahl überlagert. Die Kamera weist eine Vielzahl von Photosensoren, typischerweise einen CCD-Chip oder einen CMOS-Chip, auf, sodass jedem Photosensor, beispielsweise jedem Pixel des CCD-Chips, ein Messpunkt auf dem Objekt zugeordnet ist.

Mittels einer optischen Weglängenänderungseinheit wird die Weglänge des Mess- oder Referenzstrahls verändert. Dies erfolgt typischerweise durch Verfahren des gesamten Kohärenzrasterinterferometers relativ zu dem Objekt.

Das Kohärenzrasterinterferometer weist eine inkohärente Lichtquelle auf, sodass nur dann ein Interferenzsignal auf einem Photosensor der Kamera erzeugt wird, wenn die optischen Wege für Referenz- und Messstrahl abgeglichen sind. Durch Ermittlung der Position des Interferometers, bei welcher ein maximaler Interferenzkontrast für den jeweiligen Photosensor vorliegt, kann somit jedem Photosensor eine Höheninformation zugeordnet werden und somit können Höhengeometriedaten des Objekts ermittelt werden.

Ein Kohärenzrasterinterferometer zeichnet sich somit gegenüber einem mikroskopischen Aufbau insbesondere durch die Abbildung eines großflächigen Messbereiches auf eine Vielzahl von Photosensoren aus. Ein Kohärenzrasterinterferometer ist beispielsweise in DE 10 2005 023 212 beschrieben.

Aus US 5 493 109 A ist eine Kombination eines Mikroskops mit optischer Kohärenztomografie ("OCT")-Vorrichtung bekannt, wobei eine Autofokussteuerung abhängig von einem Ausgangssignal der OCT-Vorrichtung realisiert ist.

Aus US 2009/0219544 A1 ist ein optisches Kohärenzmikroskop zur Ermittlung dreidimensionaler Amplituden- und Phasenbilder bekannt.

Weitere Kohärenzrasterinterferometer mit verschiedenen Fokussierungseinheiten sind aus den Dokumenten US5886786, US2009/0153839 und JP2001141652 bekannt.

Der vorliegenden Erfindung liegt die Aufgabe zugrunde, das vorbekannte Kohärenzrasterinterferometer hinsichtlich der Bedienung durch den Benutzer zu vereinfachen und hierdurch zu verbessern.

Gelöst ist diese Aufgabe durch ein Kohärenzrasterinterferometer gemäß Anspruch 1. Vorteilhafte Ausgestaltungen des erfindungsgemäßen Kohärenzrasterinterferometers finden sich in den Ansprüchen 2 bis 13. Weiterhin ist diese Aufgabe gelöst durch ein Verfahren zum Auffinden einer Messposition eines Kohärenzrasterinterferometers gemäß Anspruch 14. Eine vorzugsweise Ausführungsform des erfindungsgemäßen Verfahrens findet sich in Anspruch 15. Hiermit wird der Wortlaut sämtlicher Ansprüche explizit per Referenz in die Beschreibung eingebunden. Das erfindungsgemäße Kohärenzrasterinterferometer ist vorzugsweise zur Ausführung des erfindungsgemäßen Verfahrens und/oder einer vorteilhaften Ausführungsform hiervon ausgebildet; Das erfindungsgemäße Verfahren ist vorzugsweise zur Ausführung mittels eines erfindungsgemäßen Kohärenzrasterinterferometers und/oder einer vorzugsweise Ausführungsform hiervon ausgebildet.

Das erfindungsgemäße Kohärenzrasterinterferometer zur ortsaufgelösten optischen Vermessung der Höhengeometrie der Daten eines Objekts umfasst eine Messlichtquelle, ein Interferometer und einen Messdetektor wie beispielsweise eine Kamera mit einer Detektionsfläche. Die Detektionsfläche des Messdetektors weist eine Vielzahl von ortsverschiedenen Photosensoren auf.

Das Interferometer ist mit der Messlichtquelle und dem Messdetektor derart zusammenwirkend ausgebildet, dass ein von der Messlichtquelle erzeugter Ausgangsstrahl in einen Mess- und einen Referenzstrahl aufgespalten wird. Der Messstrahl wird flächig in eine Bildebene des Messdetektors abgebildet. Ist ein Messobjekt in dieser Bildebene angeordnet, so trifft der Messstrahl somit flächig auf das Objekt auf und der von dem Objekt zumindest teilweise reflektierte und/oder gestreute Messstrahl wird wieder in den Strahlengang des Interferometers eingekoppelt und auf der Detektionsfläche der Kamera mit einer Abbildungsschärfentiefe abgebildet. Die Bildebene des Messdetektors bildet somit eine Messebene des Kohärenzrasterinterferometers und ein Objekt, welches in dieser Messebene angeordnet ist, befindet sich somit in Messposition. Die Messebene entspricht somit der objektseitigen Bildebene des Messdetektors.

Der Messstrahl wird derart auf der Detektionsfläche abgebildet und mit dem Referenzstrahl überlagert, dass der überlagerte Mess- und Referenzstrahl die Vielzahl von Photosensoren flächig überdecken.

Dies entspricht somit dem an sich bekannten Aufbau eines Kohärenzrasterinterferometers, bei welchem eine von dem Messstrahl bedeckte Messfläche auf dem Objekt mit einem Referenzstrahl der Detektionsfläche der Kamera überlagert wird, so dass jedem Fotosensor der Kamera ein jeweils ortsverschiedener Messpunkt innerhalb der Messfläche auf dem Objekt zugeordnet ist.

Weiterhin weist das Kohärenzrasterinterferometer eine optische Weglängenänderungseinheit auf, welche zur Änderung des Abstandes zwischen Objekt und Messebene ausgebildet ist.

Wesentlich ist, dass das Kohärenzrasterinterferometer zusätzlich eine Fokussierlichtquelle umfasst, welche derart im Strahlengang des Kohärenzrasterinterferometers angeordnet ist, dass ein von der Fokussierlichtquelle ausgesandter Fokussierstrahl mit einer Fokussierschärfentiefe über den Strahlteiler in eine Bildebene der Fokussierlichtquelle abgebildet wird, wobei die Bildebene der Fokussierlichtquelle identisch mit der Bildebene des Messdetektors ist und die Messebene des Kohärenzinterferometers bildet, wobei die Fokussierschärfentiefe kleiner als die Abbildungsschärfentiefe ist. Der von dem in der Messebene angeordneten Objekt zumindest teilweise reflektierte und/oder gestreute Fokussierstrahl wird auf einen Fokusdetektor abgebildet.

Die vorliegende Erfindung ist in der Erkenntnis der Anmelder begründet, dass für den Benutzer eine erhebliche Vereinfachung bei der Verwendung eines Kohärenzrasterinterferometers möglich ist: Wie bereits zuvor beschrieben, bezieht sich die vorliegende Erfindung auf Kohärenzrasterinterferometer, welche einen flächigen Bereich des Objekts auf eine Vielzahl von Photosensoren der Kamera abbilden und unterscheiden sich somit zunächst gegenüber mikroskopischen Systemen dadurch, dass eine erheblich größere Fläche auf dem Objekt abgebildet wird. Vorzugsweise wird eine Messfläche auf dem Objekt mit einer Größe von mindestens 10 mm$^2$, weiter bevorzugt mindestens 100 mm$^2$ auf die Vielzahl von Fotosensoren abgebildet. Bedingt durch die optischen Zusammenhänge ergeben sich hierbei geringe numerische Aperturen und somit eine große Tiefenschärfte bei der Abbildung des Messbereichs des Objekts auf die Kamera. Diese Abbildungsschärfentiefe kann bei typischen Ausgestaltungen einige Millimeter betragen.

Bei der Benutzung eines Kohärenzrasterinterferometers muss jedoch zunächst die Messposition eingestellt werden, d. h. die optische Weglänge insbesondere des Messstrahls müssen derart mittels der optischen Weglängenänderungseinheit eingestellt werden, dass ein Interferenzmuster auf der Detektionsfläche der Kamera durch den überlagerten Mess- und Referenzstrahl auftritt. Die Messposition ist somit diejenige Position, in welchem ein Interferenzsignal auftritt. Sie entspricht typischerweise einem Abgleich derart, dass sich die optischen Weglängen von Mess- und Referenzstrahl um weniger als eine Kohärenzlänge des Ausgangsstrahls der Messlichtquelle unterscheiden. Eine typische Kohärenzlänge bei Kohärenzrasterinterferometern kann unter 20 μm betragen.

In der Messposition ist das Objekt in der zuvor beschriebenen Messebene angeordnet, d.h. das Objekt wird mit einer Abbildungsschärfentiefe auf den Messdetektor abgebildet.Diese Abbildungsschärfentiefe kann jedoch typischerweise einige Millimeter betragen, ist somit typischerweise erheblich größer als die Kohärenzlänge.

Da die Abbildungsschärfentiefe somit erheblich größer als der Messpositionsbereich ist, in dem sich Interferenzmuster ausbilden, kann somit nicht oder nur mit erheblichem Aufwand durch optische Kontrolle oder automatisierte Verfahren mittels Auswertung der Bilddaten der Photosensoren die Messposition vor Ablauf der eigentlichen Messung angefahren werden.

Die vorliegende Erfindung stellt ein Kohärenzrasterinterferometer zur Verfügung, mit welchem in erheblich einfacherer Weise vor Durchführung der eigentlichen Messung die Messposition angefahren werden kann: Das Vorsehen einer zusätzlichen Fokussierlichtquelle, welche mit einer Fokussierschärfentiefe, die kleiner als die Abbildungsschärfentiefe ist, auf das Objekt abgebildet wird, ermöglicht somit in einfacher Weise, beispielsweise optischer Kontrolle durch den Benutzer oder automatisiert, das Abbild der Fokussierlichtquelle scharf zu stellen.

Dadurch, dass bei dem erfindungsgemäßen Kohärenzrasterinterferometer simultan eine Änderung zumindest des Messstrahls und des Fokussierstrahls bewirkt, kann somit eine Ersteinstellung derart erfolgen, dass zunächst der Fokussierstrahl "scharf gestellt" wird, d. h. in Abhängigkeit der Messsignale des Fokusdetektors die optische Weglänge von zumindest Messstrahl und Fokussierstrahl derart verändert wird, dass sich das Objekt in der Bildebene der Abbildung der Fokussierlichtquelle auf das Objekt befindet. Aufgrund der kleineren Fokussierschärfentiefe ist diese Ersteinstellung somit erheblich einfacherer und kann beispielsweise mittels optischer Kontrolle durch einen Benutzer oder automatisiert mittels Auswertung der Messsignale des Fokusdetektors, beispielsweiser der einer Intensitätsamplitude und einem entsprechenden Steuerungsalgorithmus zur Maximierung dieser Amplitude, bewirkt werden.

Nach Abschluss dieser Justierung kann gegebenenfalls durch Auswerten, insbesondere Maximieren, der Interferenzsignale noch eine weitere, genauere Feineinstellung der Messposition erfolgen; dies ist jedoch nicht zwingend erforderlich.

Nach der Ersteinstellung und vorzugsweise der Feineinstellung der Messposition kann dann die eigentliche Messung in an sich bekannter Weise erfolgen. Insbesondere kann mittels der optischen Weglängenänderungseinheit eine relative Weglängenänderung zwischen Mess- und Referenzstrahl erwirkt werden, um für unterschiedliche Höhenbereiche des Objekts jeweils Interferenzen mittels des Messdetektors zu detektieren und anhand der Weglängenänderungsdaten für jeden Messpunkt eine Höheninformation zu berechnen und somit Höhengeometriedaten des Objekts zu ermitteln. Ebenso liegt es im Rahmen der Erfindung, für die eigentliche ortsaufgelöste Vermessung der Höhengeometriedaten eine zweite optische Weglängenänderungseinheit vorzusehen, welche die optische Weglänge von Mess- und Referenzstrahl relativ zueinander verändert.

Die der Erfindung zugrunde liegende Aufgabe wird weiterhin durch ein Verfahren zum Auffinden einer Messposition eines Kohärenzrasterinterferometers gelöst. Bei dem erfindungsgemäßen Verfahren wird ein von einer Messlichtquelle erzeugter Messstrahl mittels eines Interferometers in einen Messstrahl und Referenzstrahl aufgespaltet, der Messstrahl wird mit einer Abbildungsschärfentiefe flächig auf ein Objekt abgebildet und der von dem Objekt zumindest teilweise reflektierte und/oder gestreute Messstrahl wird mit dem Referenzstrahl auf einer Detektionsfläche eines Messdetektors flächig überlagert, so dass der überlagerte Mess- und Referenzstrahl eine Vielzahl von Photosensoren einer Detektionsfläche eines Messdetektors überdecken. Hierbei wird mittels einer optischen Weglängenänderungseinheit die optische Weglänge des Messstrahls verändert. Wesentlich ist, dass ein von einer Fokussierlichtquelle erzeugter Fokussierstrahl mit einer Fokussierschärfentiefe flächig auf das Objekt abgebildet wird und der von dem Objekt zumindest teilweise reflektierte und/oder gestreute Fokussierstrahl auf einen Fokusdetektor abgebildet wird, wobei die Fokussierschärfentiefe kleiner als die Abbildungsschärfentiefe ist. Abhängig von Messsignalen des Fokusdetektors wird mittels der optischen Weglängeneinheit die optische Weglänge des Fokussierstrahls und des Messstrahls simultan derart verändert, dass der Fokussierstrahl in etwa auf das Objekt fokussiert ist.

Hierbei ergeben sich die bereits zuvor aufgeführten Vorteile, insbesondere, dass das Fokussieren des Fokussierstrahls aufgrund der geringeren Fokussierschärfentiefe eine erhebliche Erleichterung beim Auffinden der Messposition bietet.

Die aufzufindende Messposition zeichnet sich dadurch aus, dass ein Objekt, welches sich im Abstand der Messposition zu dem Kohärenzrasterinterferometer befindet, zu einem Interferenzmuster, insbesondere einem maximalen Interferenzsignal auf die zugehörigen Pixel des Messdetektors führt.

Das erfindungsgemäße Kohärenzrasterinterferometer ist vorzugsweise daher derart ausgebildet, dass die Bildebene der auf das Objekt abgebildeten Fokussierlichtquelle der Messposition entspricht, so dass bei Fokussierung der Fokussierlichtquelle auf das Objekt simultan die korrekte Messposition eingestellt ist.

Um ein einfacheres Auffinden der Messposition zu ermöglichen, ist die Fokussierschärfentiefe vorzugsweise um mindestens einen Faktor 10, bevorzugt um mindestens einen Faktor 50, weiter bevorzugt mindestens einen Faktor 100 kleiner als die Abbildungsschärfentiefe.

In einer weiteren vorzugsweisen Ausführungsform ist das Kohärenzinterferometer ausgebildet zur Abbildung der Fokussierlichtquelle mit einer Apertur $A_{N,F}$ in die Bildebene des Messdetektors, wobei gilt:

$$\frac{\lambda_F}{A_{N,F}^2} \leq c \cdot l_{C,M}$$

mit einer Hauptwellenlänge $\lambda_{Fok}$ der Fokussierlichtquelle, einer Kohärenzlänge $l_{C,M}$ der Messlichtquelle und einem Faktor c, wobei der Faktor c größer 0 und kleiner 100 ist, vorzugsweise, wobei der Faktor c im Bereich 1 bis 90, insbesondere im Bereich 10 bis 80 liegt. Hierdurch wird insbesondere ein einfaches Auffinden der Messposition durch optische Kontrolle wie zuvor beschrieben ermöglicht.

Das Kohärenzrasterinterferometer umfasst eine optische Hauptlinse, welche derart im Strahlengangs des Interferometers angeordnet ist, dass zumindest der von dem Objekt zumindest teilweise reflektierte und/oder gestreute Messstrahl zumindest über die Hauptlinse auf die Photosensoren des Messdetektors abgebildet wird. Weiterhin ist die Fokussierlichtquelle derart im Strahlengang des Kohärenzrasterinterferometers angeordnet, dass der Fokussierstrahl über zumindest eine optische Fokussierlinse auf das Objekt abgebildet wird, derart, dass die Abbildung des Objekts auf den Messdetektor mit einer numerischen Apertur $A_{N,O}$ und die Abbildung der Fokussierlichtquelle auf das Objekt mit einer numerischen Apertur $A_{N,F}$ erfolgt, wobei die Apertur $A_{N,O}$ kleiner, insbesondere um mindestens einen Faktor 2, bevorzugt um mindestens einen Faktor 5 kleiner als die Apertur $A_{N,F}$ ist. Hierdurch ist in einfacher Weise der Unterschied zwischen der Abbildungsschärfentiefe und Fokussierschärfentiefe gewährleistet.

Eine besonders vorteilhafte, konstruktiv einfache Ausgestaltung ergibt sich hierbei, indem zumindest ein Teil der Abbildungsoptik des Kohärenzrasterinterferometers sowohl das Objekt auf den Messdetektor, als auch die Fokussierlichtquelle auf das Objekt abbildet. Insbesondere ergibt sich eine konstruktiv einfachere Ausgestaltung, indem Hauptlinse und optische Fokussierlinse identisch sind, d. h. die optische Fokussierlinse die zuvor beschriebene Hauptlinse ist. Vorteilhafterweise beträgt die Apertur $A_{N,F}$ zumindest 40 %, bevorzugt zumindest 70 %, weiter bevorzugt etwa 100 % der vollen Apertur der Hauptlinse. Hierdurch ist eine optimale Ausnutzung der Hauptlinse bei Abbildung der Fokussierlichtquelle auf das Objekt gewährleistet und es wird ein hoher Unterschied zwischen den Aperturen $A_{N,F}$ und $A_{N,O}$ und somit zwischen Abbildungsschärfentiefe und Fokussierschärfentiefe ermöglicht.

Vorzugsweise weist das Kohärenzrasterinterferometer zumindest einen halbdurchlässigen optischen Fokussierlichtspiegel auf. Dieser ist derart ausgebildet und im Strahlengang des Kohärenzrasterinterometers angeordnet, dass von der Fokussierlichtquelle ausgehendes Licht über den Fokussierlichtspiegel in den Strahlengang des Interferometers eingekoppelt wird. Hierdurch wird in einfacher Weise ein Einkoppeln des Fokussierstrahls ermöglicht. Insbesondere ist es vorteilhaft, dass der Fokussierlichtspiegel im Strahlengang des Messstrahls zwischen Objekt und Messdetektor angeordnet ist. Hierdurch ergibt sich eine konstruktiv einfache Ausbildung. Besonders vorteilhaft ist diese Ausgestaltung, bei Vorsehen einer Hauptlinse wie zuvor beschrieben, wobei vorteilhafterweise der Fokussierlichtspiegel in dieser vorzugsweisen Ausführungsform im Strahlengang des Messstrahls zwischen Hauptlinse und Messdetektor angeordnet ist, um möglichst parallele Strahlengänge und damit konstruktiv einfachere Ausgestaltungen zu erzielen.

Insbesondere ist es hierbei vorteilhaft, dass der Fokussierlichtspiegel ein wellenlängenselektiver Spiegel ist, welcher für eine Wellenlänge oder einen Hauptwellenlängenbereich der Fokussierlichtquelle als teildurchlässiger Spiegel und außerhalb dieser Wellenlänge oder dieses Wellenlängenbereiches im Wesentlichen transparent ausgebildet ist. Hierdurch wird in einfacher Weise eine Separation zwischen Fokussierstrahl und den für die eigentliche Messung verwendeten Strahlen, insbesondere Messstrahl und/oder Referenzstrahl erzielt.

Es ist daher vorteilhaft, dass die Fokussierlichtquelle eine zu der Messlichtquelle unterschiedliche Wellenlänge und/oder einen zu der Messlichtquelle im Wesentlichen unterschiedlichen Wellenlängenbereich aufweist. Insbesondere ist es vorteilhaft, dass Fokussierlichtquelle und Messlichtquelle mit einem Wellenlängenabstand von zumindest 20 nm, vorzugsweise zumindest 25 nm, weiter bevorzugt zumindest 50 nm ausgebildet sind. Hierdurch kann in einfacher Weise durch Wellenlängen selektive optische Komponenten, insbesondere den zuvor beschriebenen wellenlängenselektiven Spiegel eine Einkopplung und/oder Separation des Fokussierstrahls in den Strahlengang von Mess- und/oder Referenzstrahl erfolgen.

Insbesondere kann durch wellenlängenselektive optische Komponenten ein Auskoppeln des von dem Objekts zumindest teilweise reflektierten und/oder gestreuten Fokussierstrahls aus dem Strahlengang des Kohärenzrasterinterometers und Weiterleiten auf den Fokusdetektor erfolgen.

Vorzugsweise ist die Bildebene der optischen Abbildung der Fokussierlichtquelle gleich der Bildebene der optischen Abbildung des Messdetektors.

Untersuchungen des Anmelders haben ergeben, dass vorzugsweise die Fokussierlichtquelle eine laterale Ausdehnung kleiner 0,5 mm aufweist. Insbesondere ist es vorteilhaft, dass die Fokussierlichtquelle als Punktlichtquelle und/oder als Lichtquelle umfassend eine Fokussierlichtblende ausgebildet ist. Hierdurch ergibt sich der Vorteil, dass sich ein scharfer Messpunkt im Messbereich ergibt, bei welchem eine Defokussierung optimal erkennbar ist.

In einer bevorzugten, konstruktiv besonders einfacheren Ausgestaltung, ist der Fokusdetektor der Messdetektor. In dieser vorzugsweisen Ausführungsform wird der von dem Objekt zumindest teilweise reflektierte und/oder gestreute Fokussierstrahl somit ebenfalls auf den Messdetektor abgebildet, so dass der Messdetektor zusätzlich zum Durchführen der eigentlichen Messung auch zum Auffinden der Messposition verwendet werden kann.

In konstruktiv einfacherer Weise wird das Licht der Messlichtquelle in einer vorzugsweisen Ausführungsform derart eingekoppelt, dass das Kohärenzrasterinterferometer zumindest einen optischen, teildurchlässigen Messlichtspiegel aufweist, welcher derart ausgebildet und im Strahlengang des Kohärenzrasterinterferometers angeordnet ist, dass von der Messlichtquelle ausgehendes Licht über den Messlichtspiegel in den Strahlengang des Interferometers eingekoppelt wird.

Insbesondere ist es hierbei vorteilhaft, dass das Kohärenzrasterinterferometer mit einer Hauptlinse wie zuvor beschrieben ausgebildet ist und der Messlichtspiegel zwischen Hauptlinse und Messdetektor angeordnet ist. Bei weiterem Vorsehen eines Fokussierlichtspiegels wie zuvor beschrieben ist es vorteilhaft, dass der Messlichtspiegel zwischen Fokussierlichtspiegel und Messdetektor angeordnet ist.

Vorzugsweise weist das Kohärenzrasterinterferometer einen optischen Referenzspiegel auf, welcher im Strahlengang des Referenzstrahls angeordnet ist. Insbesondere kann die Messung in einfacher Weise durch Vorsehen einer zweiten optischen Weglängenänderungseinheit, welche den optischen Referenzspiegel verschiebt, erzielt werden. Weiter bevorzugt umfasst das Kohärenzrasterinterferometer weiterhin einen optischen, teildurchlässigen Referenzlichtablenkspiegel, wobei von der Messlichtquelle ausgehendes Licht über den Messlichtablenkspiegel auf den Referenzspiegel abgebildet wird. Insbesondere ist es vorteilhaft, dass der Strahlteiler der Referenzlichtablenkspiegel ist.

Vorzugsweise ist die Fokussierlichtquelle derart ausgebildet, dass keine Lasersicherheitsrichtlinien beachtet werden müssen. Hierdurch ergibt sich eine unaufwändige Anwendung zum Auffinden der Messposition. Laser-Sicherheitsrichtlinien müssen insbesondere nicht beachtet werden, wenn gemäß Gerätespezifikation der Lichtquelle kein Laserbeauftragter vorgeschrieben ist.

Insbesondere ist es vorteilhaft, die Fokussierlichtquelle als LED-Lichtquelle auszubilden.

In konstruktiv einfacher Weise wird die zuvor genannte numerische Apertur $A_{N,O}$ durch eine Aperturblende im Strahlengang zumindest des Messstrahls, vorzugsweise des Messstrahls und des Referenzstrahls erzielt. Insbesondere ist die Aperturblende bevorzugt im Strahlengang des Messstrahls zwischen Objekt und Messdetektor angeordnet, insbesondere bevorzugt bei Vorsehen einer Hauptlinse wie zuvor beschrieben ist die Aperturblende vorzugsweise zwischen Hauptlinse und Messdetektor angeordnet. Wird weiterhin ein Fokussierlichtspiegel wie zuvor beschrieben vorgesehen, so ist vorzugsweise die Aperturblende zwischen Fokussierlichtspiegel und Messdetektor angeordnet.

Besonders vorteilhaft ist es, die Aperturblende als dichromatische Aperturblende auszubilden, welche in einem inneren, kreisförmigen Bereich sowohl für Mess- und Referenzlicht, als auch für das Fokussierlicht durchlässig ist. In einem äußeren, ringförmigen Bereich, welcher ringförmige Bereich konzentrisch zu dem inneren kreisförmigen Bereich ist, ist die dichromatische Aperturblende jedoch lediglich für das Fokussierlicht und nicht für das Mess- und Referenzlicht durchlässig ausgebildet. Hierdurch wird somit durch den Innenradius des äußeren, ringförmigen Bereichs die Apertur für Mess- und Referenzlicht und damit die Abbildungsschärfentiefe festgelegt, wohingegen die Abbildung des Bildes der Fokussierlichtquelle in der Bildebene des Messdetektors nicht durch die Aperturblende eingeschränkt wird und somit eine größer Apertur aufweisen kann.

In einer weiteren vorzugsweisen Ausführungsform, bei welcher das Kohärenzrasterinterferometer wie zuvor beschrieben einen Referenzlichtablenkspiegel und Referenzspiegel aufweist, sind bevorzugt Referenzlichtablenkspiegel und Referenzspiegel als ein austauschbares Element in einer baulichen Einheit ausgebildet. Insbesondere ist es vorteilhaft, zusätzlich eine Hauptlinse wie zuvor beschrieben vorzusehen und Hauptlinse, Referenzlichtablenkspiegel und Referenzspiegel als ein austauschbares Element in einer baulichen Einheit auszubilden. Hierdurch ergibt sich der Vorteil, dass ein Hybridsystem mit wahlweise großer oder kleiner lateraler Auflösung ausgebildet werden kann.

Das Kohärenzrasterinterferometer ist vorzugsweise nach Art eines Twyman-Green-Interferometers ausgebildet.

Weitere vorzugsweise Merkmale und Ausführungsformen werden nachfolgend anhand von Ausführungsbeispielen und den Figuren erläutert. Dabei zeigt:

Figur 1　ein erstes Ausführungsbeispiel eines erfindungsgemäßen Kohärenzrasterinterferometers, bei welchem Messdetektor und Fokusdetektor identisch sind;

Figur 2　ein zweites Ausführungsbeispiel eines erfindungsgemäßen Kohärenzrasterinterferometers, welches eine Variante des in Figur 1 dargestellten ersten Ausführungsbeispiels ist und

Figur 3　ein drittes Ausführungsbeispiel eines erfindungsgemäßen Kohärenzrasterinterferometers, bei welchem ein Messdetektor und ein Fokusdetektor separat ausgebildet sind.

Alle Figuren zeigen schematische, nicht maßstabsgetreue Darstellungen. In den Figuren bezeichnen gleiche Bezugszeichen gleiche oder gleichwirkende Elemente.

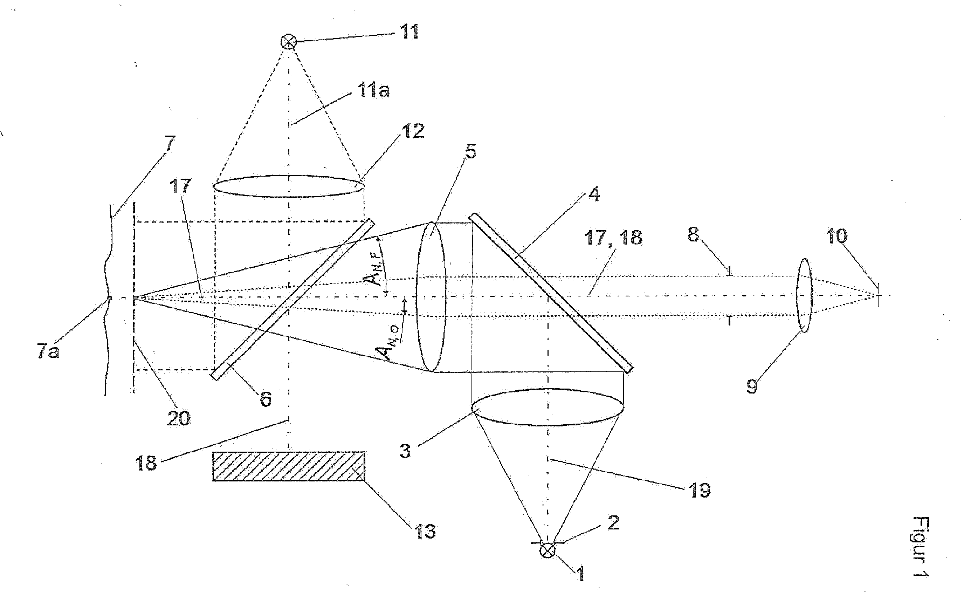

In den Figuren 1 bis 3 ist gestrichelt eine Messebene 20 des jeweiligen Kohärenzrasterinterferometers dargestellt. Ein Objekt 7 ist jeweils von der Messebene 20 beabstandet dargestellt, d.h. das Objekt 7 befindet sich nicht in Messposition. Ziel des erfindungsgemäßen Verfahrens und der erfindungsgemäßen Vorrichtung ist, die Anordnung des Messobjekts 7 in Messposition zu vereinfachen und zu Beschleunigen.

Das in Figur 1 dargestellte erste Ausführungsbeispiel eines erfindungsgemäßen Kohärenzrasterinterferometers umfasst eine Messlichtquelle 11, welche einen Ausgangsstrahl 11a mit einer Wellenlänge von etwa 525 nm aussendet. Der Ausgangsstrahl 11a wird über eine optische Ausgangsstrahllinse 12 auf einen teildurchlässigen Messlichtspiegel 6 geleitet, welcher als Strahlteiler fungiert, so dass ein Messstrahl 17 auf ein zu vermessendes Objekt 7 trifft und ein Referenzstrahl 18 (nur die optische Strahlachse ist gestrichelt dargestellt) auf einen Referenzspiegel 13 auftrifft.

Der zumindest teilweise von dem Objekt reflektierte und/oder gestreute Messstrahl 17 wird über eine Hauptlinse 5 und eine Tubuslinse 9 auf einen als Kamera ausgebildeten Messdetektor 10 abgebildet. Der Messdetektor 10 weist eine als CMOS-Chip ausgebildete Detektionsfläche auf, bei welcher somit jeder Pixel des CMOS-Chips einen Photosensor darstellt. Ebenso kann der Chip als CCD-Chip ausgebildet sein.

Der Referenzstrahl 18 wird ausgehend von dem Referenzspiegel 13 über den Messlichtspiegel 6, die Hauptlinse 5 und die Tubuslinse 9 ebenfalls auf den CMOS-Chip des Messdetektors 10 abgebildet, so dass sich auf der Detektionsfläche des Messdetektors 10 Mess- und Referenzstrahl überlagern.

Zur einfacheren Darstellung ist in den Figuren 1 bis 3 lediglich der Strahlengang des Messstrahls 17 für einen Messpunkt 7a auf dem Objekt 7 dargestellt. Da ein analoger Strahlengang auch für alle weiteren Messpunkte vorliegt, werden Mess- und Referenzstrahl somit derart auf der Detektionsfläche des Messdetektors 10 überlagert, dass sie eine Vielzahl von Photosensoren flächig überdecken.

Mittels einer nicht dargestellten optischen Weglängenänderungseinheit kann der Abstand zwischen Objekt 7 und dem Kohärenzrasterinterferometer verändert werden, so dass sich die optische Weglänge des Messstrahls 17 wahlweise ändern lässt. Hierzu wird das Kohärenzrasterinterferometer relativ zu dem Objekt 7 verschoben. Ebenso kann das Objekt relativ zu dem Kohärenzrasterinterferometer verschoben werden oder auf andere Weise die optische Weglänge zwischen Objekt 7 und Strahlteiler 6 verändert werden.

Wesentlich ist nun, dass zusätzlich eine Fokussierlichtquelle 1 vorgesehen ist, welche als LED mit einer Wellenlänge von 630 nm ausgebildet ist. Die Fokussierlichtquelle 1 sendet einen Fokussierstrahl 19 aus, welcher über eine optische Fokussierlichtlinse 3, einen wellenlängenselektiven, teildurchlässigen Fokussierlichtspiegel 4, die Hauptlinse 5 und den Messlichtspiegel 6 auf das Objekt 7 abgebildet wird.

Der Fokussierlichtspiegel 4 ist dabei für das Fokussierlicht der Wellenlänge 630 nm teildurchlässig in einem Verhältnis Transmission zur Reflektion von *50:50* bis 70:30 ausgebildet. Hinsichtlich der Messlichtwellenlänge 525 nm ist der Fokussierlichtspiegel 4 hingegen vollständig transmittierend ausgebildet.

Über eine Fokussierlichtblende 2 wird erzielt, dass die Fokussierlichtquelle effektiv eine laterale Ausdehnung kleiner 0,5 mm, vorliegend von etwa 0,4 mm aufweist.

Die Abbildung der Fokussierlichtquelle 1 auf das Objekt 7 erfolgt hinsichtlich der Hauptlinse 5 mit einer größeren Numerischen Apertur $A_{N,F}$ gegenüber der Numerischen Apertur $A_{N,O}$ und somit geringeren Schärfentiefe gegenüber der Abbildung des Objekts 7 auf den Messdetektor 10:

Die Abbildung der Fokussierlichtquelle nutzt in etwa die volle numerische Apertur der Hauptlinse 5, welche somit der zuvor beschriebenen optischen Apertur $A_{N,F}$ entspricht.

Über eine Aperturblende 8, welche im Strahlengang von Mess- und Referenzstrahl zwischen Hauptlinse 5 und Messdetektor 10 angeordnet ist, wird erzielt, dass ein Messpunkt (beispielsweise Messpunkt 7a) auf dem Objekt mit einer erheblich geringeren Apertur, welche somit der zuvor genannten numerischen Apertur $A_{N,O}$ entspricht, auf den Messdetektor 10 abgebildet.

Die Bildebene der Abbildung der Fokussierlichtquelle 1 auf das Objekt 7 entspricht der optimalen Messposition, d. h. demjenigen Abstand zwischen Objekt und Kohärenzinterferometer, in welchem ein maximales Interferenzsignal an dem Messdetektor 10 ausgebildet wird. Die Bildebene der Fokussierlichtquelle 1 entspricht somit der objektseitigen Bildebene des Messdetektors und somit ebenso der Messebene des Kohärenzrasterinterferometers.

Zum Auffinden der Messposition wird daher zumindest die Fokussierlichtquelle 1 eingeschaltet und beispielsweise durch einen Benutzer mittels optischer Kontrolle einer Bildwiedergabe der vom Messdetektor 10 aufgenommenen Signale wird die Fokussierlichtquelle "scharf gestellt", so dass die Oberfläche des Objekts 7 in der Bildebene der Abbildung der Fokussierlichtquelle 1 liegt. Da die Bildebene der Fokussierlichtquelle der objektseitigen Bildebene des Messdetektors entspricht, erfolgt durch das vorgenannte "scharf stellen" somit gleichzeitig ein Einstellen der korrekten Messposition, d.h. ein Anordnen des Objekts in der Messebene.

Anschließend kann die Messung in an sich bekannter Weise durchgeführt werden. Aufgrund des Wellenlängenunterschieds zwischen Messlicht und Fokussierlicht kann das Fokussierlicht hierbei eingeschaltet bleiben. Vorzugsweise wird das Fokussierlicht bei der eigentlichen Messung, d. h. Bestimmen der Höhengeometriedaten des Objekts 7 jedoch ausgeschaltet, um etwaige Störeffekte zu vermeiden.

Die eigentliche Messung kann mittels der bereits zuvor genannten optischen Weglängenänderungseinheit verfolgen, indem der Abstand zwischen Objekt 7 und Kohärenzrasterinterferometer verändert wird. Alternativ und/oder zusätzlich kann auch für die eigentliche Messung der Referenzspiegel 13 parallel zur optischen Strahlachse des Referenzstrahls 18 verschoben werden.

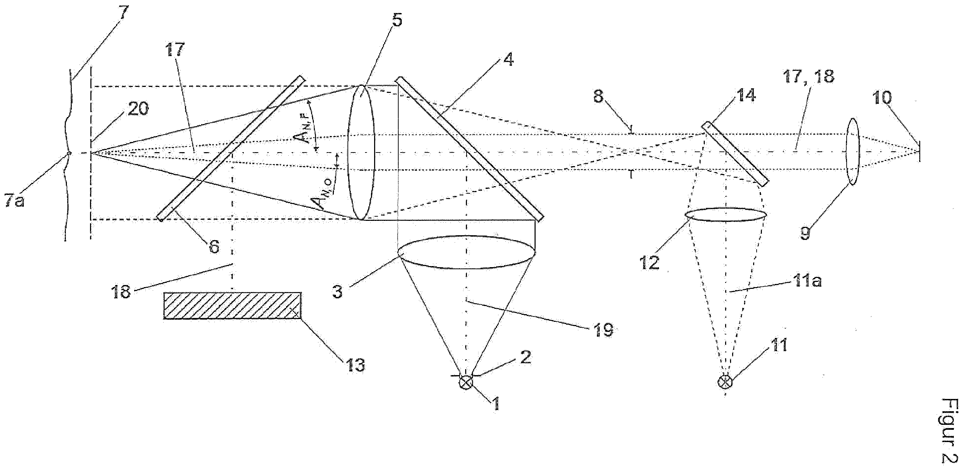

Das zweite Ausführungsbeispiel eines Kohärenzrasterinterferometers gemäß Figur 2 entspricht im Wesentlichen dem in Figur 1 dargestellten ersten Ausführungsbeispiel. Zur Vermeidung von Wiederholungen wird nachfolgend daher lediglich auf die wesentlichen Unterschiede eingegangen:

Bei dem zweiten Ausführungsbeispiel ist die Messlichtquelle 11 derart angeordnet, dass über die optische Ausgangsstrahllinse 12 und einen teildurchlässigen Messlichteinkoppelspiegel 14 der Ausgangsstrahl 11a über den Messlichteinkoppelspiegel 14 zwischen Aperturblende 8 und Tubuslinse 9 in den Strahlengang von Mess- und Referenzstrahl eingekoppelt wird und die Messlichtquelle in den rückseitigen Fokus der Hauptlinse 5 abgebildet wird. Hierdurch wird in einfacher Weise eine flächige Beleuchtung des Objekts 7 erzielt.

Hierdurch ergibt sich gegenüber dem ersten Ausführungsbeispiel gemäß Figur 1 der Vorteil, dass wechselbare Optiken, z.B. Interferenzmikroskopobjektive verwendet werden können.

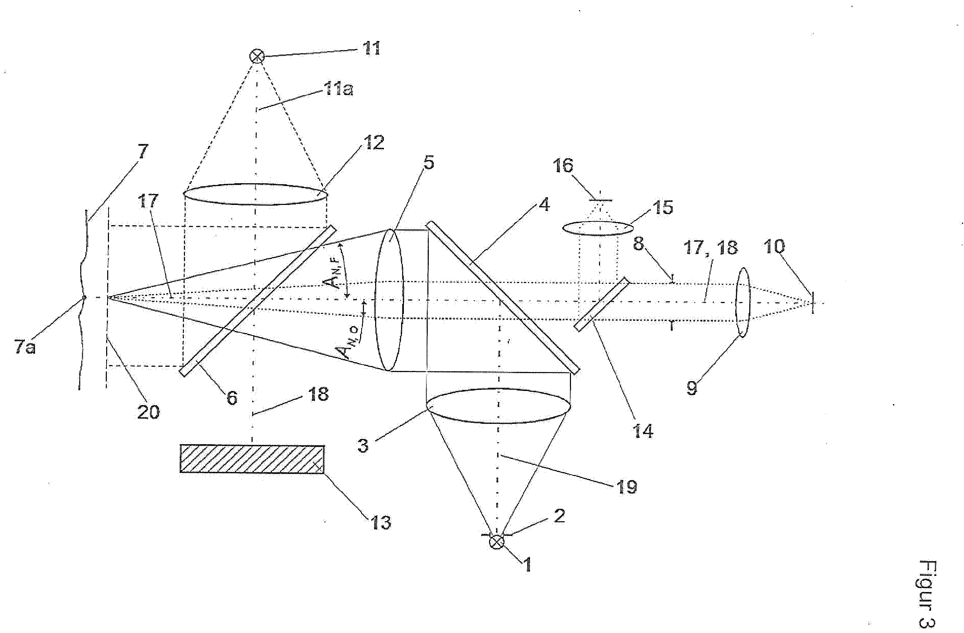

Das in Figur 3 dargestellte dritte Ausführungsbeispiel eines erfindungsgemäßen Kohärenzrasterinterferometers entspricht ebenfalls im Wesentlichen dem ersten Ausführungsbeispiel gemäß Figur 1 und nachfolgend wird zum Vermeiden von Wiederholungen lediglich auf die wesentlichen Unterschiede eingegangen:

In den Ausführungsbeispielen gemäß Figur 1 und 2 sind Messdetektor und Fokusdetektor durch einen identischen Detektor realisiert. In dem in Figur 3 dargestellten Ausführungsbeispiel sind Messdetektor und Fokusdetektor hingegen als zwei verschiedene Detektoren realisiert:

Der Messdetektor 10 des dritten Ausführungsbeispiels gemäß Figur 3 dient ausschließlich zum Durchführen der eigentlichen Messung. Der von der Fokussierlichtquelle 1 ausgesandte Fokussierstrahl wird - nachdem er von dem Objekt 7 zumindest teilweise reflektiert und/oder gestreut wurde - von einem Fokussierlichtauskoppelspiegel 14, welcher wellenlängenselektiv ausgebildet ist, über eine Fokussierlichttubuslinse 15 auf einen Fokusdetektor 16 abgebildet.

Aufgrund des wellenlängenselektiv ausgebildeten Fokussierlichtauskoppelspiegels 14 treten Messstrahl 17 und Referenzstrahl 18 jedoch durch den in diesem Wellenlängenbereich transmittierenden Fokussierlichtauskoppelspiegel 14 hindurch und werden nach Passieren der Aperturblende 8 mittels der Tubuslinse 9 auf den Messdetektor 10 wie auch bei dem ersten Ausführungsbeispiel abgebildet.

Das dritte Ausführungsbeispiel weist den Vorteil auf, dass der Fokusdetektor 16 als kostengünstiger Detektor speziell auf die Wellenlänge der Fokussierlichtquelle 1 ausgestaltet werden kann. Insbesondere ist es nicht notwendig, dass der Fokusdetektor 16 ortsauflösend ausgebildet ist. Durch Ausführen einer Steuerung abhängig von der Intensität der Messsignale des Fokusdetektors 16 kann in einfacher Weise automatisiert ein Auffinden der Bildebene der Fokussierlichtquelle und somit ein Auffinden der Messposition realisiert werden.

**Patentansprüche**

1. Kohärenzrasterinterferometer zur ortsaufgelösten optischen Vermessung der Höhengeometriedaten eines Objekts, umfassend eine optische Weglängenänderungseinheit, eine Messlichtquelle (11), ein Interferometer und einen Messdetektor (10) mit einer Detektionsfläche, welche Detektionsfläche eine Vielzahl von ortsverschiedenen Photosensoren aufweist, wobei das Interferometer mit der Messlichtquelle (11) und dem Messdetektor (10) derart zusammenwirkend ausgebildet ist, dass ein von der Messlichtquelle (11) erzeugter Ausgangsstrahl mittels eines Strahlteilers (6) des Kohärenzrasterinterferometers in einen Mess- und einen Referenzstrahl (18) aufgespaltet wird, der Messstrahl (17) flächig in eine Bildebene des Messdetektors, welche die Messebene des Kohärenzrasterinterferometers bildet, abgebildet wird, so dass in Messposition bei in der Messebene angeordnetem Objekt der Messstrahl (17) flächig auf das Objekt (7) auftrifft und der von dem Objekt (7) zumindest teilweise reflektierte und/oder gestreute Messstrahl (17) wieder in den Strahlengang des Interferometers eingekoppelt und derart auf die Detektionsfläche des Messdetektors (10) abgebildet und mit dem Referenzstrahl (18) überlagert wird, dass der überlagerte Mess- und Referenzstrahl (18) die Vielzahl von Photosensoren flächig überdecken, wobei die optische Weglängenänderungseinheit ausgebildet ist zur Änderung des Abstandes zwischen Objekt und Messebene und wobei das Kohärenzinterferometer ausgebildet ist zur Abbildung des in Messebene angeordneten Objekts auf die Detektionsfläche mit einer Abbildungsschärfentiefe,
**dadurch gekennzeichnet,**
**dass** das Kohärenzrasterinterferometer zusätzlich eine Fokussierlichtquelle (1) umfasst, welche Fokussierlichtquelle (1) derart mit dem Kohärenzrasterinterferometer zusammenwirkend ausgebildet ist, dass ein von der Fokussierlichtquelle (1) ausgesandter Fokussierstrahl (19) mit einer Fokussierschärfentiefe über den Strahlteiler (6) in eine Bildebene der Fokussierlichtquelle abgebildet wird, welche Bildebene der Fokussierlichtquelle identisch mit der Bildebene des Messdetektors (10) ist und die Messebene des Kohärenzinterferometers bildet und dass der von dem Objekt (7) zumindest teilweise reflektierte und/oder gestreute Fokussierstrahl auf einen Fokusdetektor (16) abgebildet wird, wobei die Fokussierschärfentiefe kleiner als die Abbildungsschärfentiefe ist, und
**dass** das Interferometer eine optische Hauptlinse (5) umfasst, welche derart im Strahlengang des Interferometers angeordnet ist, dass zumindest der von dem in der Bildebene des Messdetektors angeordneten Objekt (7) zumindest teilweise reflektierte und/oder gestreute Messstrahl (17) zumindest über die Hauptlinse (5) auf die Photosensoren des Messdetektors abgebildet wird und dass die Fokussierlichtquelle (1) derart im Strahlengang des Kohärenzrasterinterferometer angeordnet ist, dass der Fokussierstrahl über zumindest eine optische Fokussierlinse auf das Objekt (7) abgebildet wird, derart, dass die Abbildung des Objekts auf den Messdetektor (10) mit einer numerischen Apertur $A_{N,O}$ und die Abbildung der Fokussierlichtquelle (1) auf das Objekt (7) mit einer numerischen Apertur $A_{N,F}$ erfolgt, wobei die Apertur $A_{N,O}$ kleiner ist als die Apertur $A_{N,F}$.

2. Kohärenzrasterinterferometer nach Anspruch 1,
**dadurch gekennzeichnet,**
**dass** die Fokussierschärfentiefe um mindestens einen Faktor 10, bevorzugt einen mindestens Faktor 50, weiter bevorzugt um mindestens einen Faktor 100 kleiner als die Abbildungsschärfentiefe ist.

3. Kohärenzrasterinterferometer nach einem der vorangegangenen Ansprüche,
**dadurch gekennzeichnet,**
**dass** die Fokussierschärfentiefe kleiner 500 $\mu$m, bevorzugt kleiner 100 $\mu$m, insbesondere kleiner 50 $\mu$m ist.

4. Kohärenzrasterinterferometer nach einem der vorangegangenen Ansprüche,
**dadurch gekennzeichnet,**
**dass** das Kohärenzinterferometer ausgebildet ist zur Abbildung der Fokussierlichtquelle (1) mit einer Apertur $A_{N,F}$ in die Bildebene des Messdetektors, wobei gilt:

$$\frac{\lambda_F}{A_{N,F}^2} \leq c \cdot l_{C,M}$$

mit einer Hauptwellenlänge $\lambda_F$ der Fokussierlichtquelle, einer Kohärenzlänge $l_{C,M}$ der Messlichtquelle (11) und einem Faktor c, wobei der Faktor c größer 0 und kleiner 100 ist, vorzugsweise, wobei der Faktor c im Bereich 1 bis 90, insbesondere im Bereich 10 bis 80 liegt.

5. Kohärenzrasterinterferometer nach einem der vorangegangenen Ansprüche,
**dadurch gekennzeichnet,**
**dass** die Apertur $A_{N,O}$ um mindestens einen Faktor 2 kleiner, bevorzugt um mindestens einen Faktor 5 kleiner ist als die Apertur $A_{N,F}$, insbesondere,
**dass** zumindest ein Teil einer Abbildungsoptik des Kohärenzrasterinterferometers sowohl das Objekts auf den Messdetektor (10), als auch die Fokussierlichtquelle (1) auf das Objekt (7) abbildet, insbesondere,

**dass** die optische Fokussierlinse die Hauptlinse (5) ist, bevorzugt, dass die Apertur $A_{N,F}$ zumindest 80%, bevorzugt zumindest 90%, weiter bevorzugt etwa 100% der vollen Apertur der Hauptlinse (5) ist.

6. Kohärenzrasterinterferometer nach einem der vorangegangenen Ansprüche,
   **dadurch gekennzeichnet,**
   **dass** das Kohärenzrasterinterferometer zumindest einen halbdurchlässigen optischen Fokussierlichtspiegel (4) aufweist welcher derart ausgebildet und im Strahlengang des Kohärenzrasterinterferometers angeordnet ist, dass von der Fokussierlichtquelle (1) ausgehendes Licht über den Fokussierlichtspiegel (4) in den Strahlengang des Interferometers eingekoppelt wird, vorzugsweise, dass der Fokussierlichtspiegel (4) im Strahlengang des Messstrahls zwischen Objekt (7) und Messdetektor (10) angeordnet ist, insbesondere, dass das Kohärenzrasterinterferometer gemäß Anspruch 3 ausgebildet ist und der Fokussierlichtspiegel (4) im Strahlengang des Messstrahls zwischen Hauptlinse und Messdetektor (10) angeordnet ist, insbesondere,
   **dass** der Fokussierlichtspiegel (4) eine wellenlängenselektiver Spiegel ist, welcher für eine Wellenlänge oder einen Wellenlängenbereich der Fokussierlichtquelle (1) teildurchlässig und außerhalb dieser Wellenlänge oder dieses Wellenlängenbereiches im Wesentlichen transparent ausgebildet ist.

7. Kohärenzrasterinterferometer nach einem der vorangegangenen Ansprüche,
   **dadurch gekennzeichnet,**
   **dass** die Fokussierlichtquelle (1) eine zu der Messlichtquelle (11) unterschiedliche Wellenlänge und/oder einen zu der Messlichtquelle im Wesentlichen unterschiedlichen Wellenlängenbereich aufweist, vorzugsweise,
   **dass** Fokussierlichtquelle (1) und Messlichtquelle mit einem Wellenlängenabstand von zumindest 20 nm, vorzugsweise zumindest 25 nm, weiter bevorzugt zumindest 50 nm ausgebildet sind.

8. Kohärenzrasterinterferometer nach einem der vorangegangenen Ansprüche,
   **dadurch gekennzeichnet,**
   **dass** die Bildebener optischen Abbildung der Fokussierlichtquelle (1) gleich der objektseitigen Bildebene der optischen Abbildung des Messdetektors entspricht.

9. Kohärenzrasterinterferometer nach einem der vorangegangenen Ansprüche,
   **dadurch gekennzeichnet,**
   **dass** die Fokussierlichtquelle (1) eine laterale Ausdehnung kleiner 0,5 mm aufweist, insbesondere, dass die Fokussierlichtquelle (1) als Punktlichtquelle und/oder als Lichtquelle umfassend eine Fokussierlichtblende (2) ausgebildet ist.

10. Kohärenzrasterinterferometer nach einem der vorangegangenen Ansprüche,
    **dadurch gekennzeichnet,**
    **dass** der Fokusdetektor (16) der Messdetektor (10) ist.

11. Kohärenzrasterinterferometer nach einem der vorangegangenen Ansprüche,
    **dadurch gekennzeichnet,**
    **dass** das Kohärenzrasterinterferometer zumindest einen optischen, teildurchlässigen Messlichtspiegel (6) aufweist, welcher derart ausgebildet und im Strahlengang des Kohärenzrasterinterferometers angeordnet ist, dass von der Messlichtquelle ausgehendes Licht über den Messlichtspiegel (6) in den Strahlengang des Interferometers eingekoppelt wird.

12. Kohärenzrasterinterferometer nach Anspruch 3 und Anspruch 11,
    **dadurch gekennzeichnet,**
    **dass** der Messlichtspiegel (6) zwischen Hauptlinse und Messdetektor (10) angeordnet ist.

13. Kohärenzrasterinterferometer nach einem der vorangegangenen Ansprüche,
    **dadurch gekennzeichnet,**
    **dass** das Kohärenzrasterinterferometer zumindest einen optischen, teildurchlässigen Referenzlichtablenkspiegel und einen optischen Referenzspiegel (13) aufweist, welche derart ausgebildet und im Strahlengang des Kohärenzrasterinterferometers angeordnet sind, dass von der Messlichtquelle ausgehendes Licht über den Messlichtablenkspiegel auf den Referenzspiegel (13) abgebildet wird, vorzugsweise, dass der Strahlteiler (6) der Referenzlichtablenkspiegel ist.

14. Verfahren zum Auffinden einer Messposition eines Kohärenzrasterinterferometers, vorzugsweise gemäß einem der vorangegangenen Ansprüche, wobei ein von einer Messlichtquelle erzeugter Messstrahl (17) mittels eines Interferometers in einen Messstrahl und einen Referenzstrahl (18) aufgespaltet wird, der Messstrahl (17) flächig auf ein Objekt (7) abgebildet wird und der von dem Objekt (7) zumindest teilweise reflektierte und/oder gestreute Messstrahl (17) mit dem Referenzstrahl (18) auf einer Detektionsfläche eines Messdetektors derart überlagert wird, dass der überlagerte Mess- und Referenzstrahl (18) eine Vielzahl von Photosensoren einer Detektionsfläche eines Messdetektors flächig überdecken, wobei mittels einer optischen Weglängenänderungseinheit die optische Weglänge des Messstrahls verändert wird,

wobei das in der Bildebene des Messdetektors (10) angeordnete Objekt auf die Detektionsfläche mit einer Abbildungsschärfentiefe abgebildet wird,
**dadurch gekennzeichnet,**
**dass** ein von einer Fokussierlichtquelle (1) erzeugter Fokussierstrahl (19) mit einer Fokussierschärfentiefe flächig auf das in der Bildebene des Messdetektors angeordnete Objekt (7) abgebildet wird und der von dem Objekt (7) zumindest teilweise reflektierte und/oder gestreute Fokussierstrahl (19) auf einen Fokusdetektor (16) abgebildet wird, wobei die Fokussierschärfentiefe kleiner als die Abbildungsschärfentiefe ist und abhängig von Messsignalen des Fokusdetektors mittels der optischen Weglängeneinheit die optische Weglänge des Fokussierstrahls und des Messstrahls simultan derart verändert wird, dass das der Fokussierstrahl (19) in etwa auf das Objekt (7) fokussiert ist, und
**dass** Messstrahl (17) und Fokussierstrahl (19) über eine gemeinsame optische Hauptlinse (5) auf das Objekt (7) abgebildet werden, vorzugsweise, dass die Abbildung des Objekts auf den Messdetektor (10) mit einer numerischen Apertur $A_{N,O}$ und die Abbildung der Fokussierlichtquelle (1) auf das in der Bildebene des Messdetekros angeordnete Objekt (7) mit einer numerischen Apertur $A_{N,F}$ erfolgt, wobei die Apertur $A_{N,O}$ kleiner als die Apertur $A_{N,F}$ ist.

15. Verfahren zum Auffinden einer Messposition eines Kohärenzrasterinterferometer nach Anspruch 14,
**dadurch gekennzeichnet,**
**dass** die Apertur $A_{N,O}$ um mindestens einen Faktor 2, bevorzugt um mindestens einen Faktor 5 kleiner als die Apertur $A_{N,F}$ ist.

**Claims**

1. Coherence scanning interferometer for spatially resolved optical measurement of the height geometry data of an object,
comprising an optical path-length-changing unit, a measuring light source (11), an interferometer and a measuring detector (10) having a detection surface, which detection surface has a multiplicity of photosensors at different locations,
wherein the interferometer is configured to co-operate with the measuring light source (11) and the measuring detector (10) in such a way that an output beam generated by the measuring light source (11) is split into a measuring beam and a reference beam (18) by means of a beam splitter (6) of the coherence scanning interferometer, the measuring beam (17) is imaged two-dimensionally into an image plane of the measuring detector, which image plane forms the measuring plane of the coherence scanning interferometer, so that in the measuring position, when an object is arranged in the measuring plane, the measuring beam (17) is incident two-dimensionally on the object (7) and the measuring beam (17) at least partly reflected and/or scattered by the object (7) is coupled into the beam path of the interferometer again and imaged onto the detection surface of the measuring detector (10) and superposed with the reference beam (18) in such a way that the superposed measuring beam and reference beam (18) two-dimensionally overlap the multiplicity of photosensors,
wherein the optical path-length-changing unit is configured to change the distance between the object and the measuring plane, and wherein the coherence interferometer is configured to image the object arranged in the measuring plane onto the detection surface with an imaging depth of field,
**characterised in that**
the coherence scanning interferometer additionally comprises a focussing light source (1), which focussing light source (1) is configured to co-operate with the coherence scanning interferometer in such a way that a focussing beam (19) emitted by the focussing light source (1) is imaged with a focussing depth of field via the beam splitter (6) into an image plane of the focussing light source, which image plane of the focussing light source is identical with the image plane of the measuring detector (10) and forms the measuring plane of the coherence interferometer; and the focussing beam at least partly reflected and/or scattered by the object (7) is imaged onto a focus detector (16),
wherein the focussing depth of field is smaller than the imaging depth of field, and
the interferometer comprises an optical main lens (5) which is arranged in the beam path of the interferometer in such a way that at least the measuring beam (17) at least partly reflected and/or scattered by the object (7) arranged in the image plane of the measuring detector is imaged at least via the main lens (5) onto the photosensors of the measuring detector; and the focussing light source (1) is arranged in the beam path of the coherence scanning interferometer in such a way that the focussing beam is imaged onto the object (7) via at least one optical focussing lens in such a way that the imaging of the object onto the measuring detector (10) is effected with a numerical aperture $A_{N,O}$ and the imaging of the focussing light source (1) onto the object (7) is effected with a numerical aperture $A_{N,F}$, the aperture $A_{N,O}$ being smaller than the aperture $A_{N,F}$.

2. Coherence scanning interferometer according to claim 1,
**characterised in that**
the focussing depth of field is at least a factor of 10, preferably at least a factor of 50, more preferably at least a factor of 100, smaller than the imaging depth of field.

3. Coherence scanning interferometer according to either one of the preceding claims, **characterised in that** the focussing depth of field is less than 500 $\mu$m, preferably less than 100 $\mu$m, especially less than 50 $\mu$m.

4. Coherence scanning interferometer according to any one of the preceding claims, **characterised in that** the coherence interferometer is configured for imaging the focussing light source (1) into the image plane of the measuring detector with an aperture $A_{N,F}$, wherein the following applies:

$$\frac{\lambda_{\mathrm{F}}}{A_{N,F}^2} \leq c \cdot l_{C,M}$$

with a main wavelength $\lambda_{\mathrm{F}}$ of the focussing light source, a coherence length $l_{C,M}$ of the measuring light source (11) and a factor $c$, wherein the factor $c$ is greater than 0 and smaller than 100, preferably wherein the factor $c$ is in the range of from 1 to 90, especially in the range of from 10 to 80.

5. Coherence scanning interferometer according to any one of the preceding claims, **characterised in that** the aperture $A_{N,O}$ is smaller by at least a factor of 2, preferably smaller by at least a factor of 5, than the aperture $A_{N,F}$, especially, at least part of an imaging optical system of the coherence scanning interferometer images both the object onto the measuring detector (10) and the focussing light source (1) onto the object (7); especially, the optical focussing lens is the main lens (5); preferably, the aperture $A_{N,F}$ is at least 80%, preferably at least 90%, more preferably about 100%, of the full aperture of the main lens (5).

6. Coherence scanning interferometer according to any one of the preceding claims, **characterised in that** the coherence scanning interferometer has at least one semi-transparent optical focussing light mirror (4) which is configured and arranged in the beam path of the coherence scanning interferometer in such a way that light emitted by the focussing light source (1) is coupled into the beam path of the interferometer via the focussing light mirror (4); preferably, the focussing light mirror (4) is arranged in the beam path of the measuring beam between the object (7) and the measuring detector (10); especially, the coherence scanning interferometer is configured in accordance with claim 3 and the focussing light mirror (4) is arranged in the beam path of the measuring beam between the main lens and the measuring detector (10); especially, the focussing light mirror (4) is a wavelength-selective mirror which is configured to be semitransparent to a wavelength or a wavelength range of the focussing light source (1) and substantially transparent outside that wavelength or that wavelength range.

7. Coherence scanning interferometer according to any one of the preceding claims, **characterised in that** the focussing light source (1) has a wavelength different from the measuring light source (11) and/or a wavelength range substantially different from the measuring light source; preferably, the focussing light source (1) and measuring light source are configured with a wavelength spacing of at least 20 nm, preferably at least 25 nm, more preferably at least 50 nm.

8. Coherence scanning interferometer according to any one of the preceding claims, **characterised in that** the image plane of the optical imaging of the focussing light source (1) corresponds to the object-side image plane of the optical imaging of the measuring detector.

9. Coherence scanning interferometer according to any one of the preceding claims, **characterised in that** the focussing light source (1) has a lateral extent of less than 0.5 mm; especially, the focussing light source (1) is in the form of a point light source and/or in the form of a light source comprising a focussing light diaphragm (2).

10. Coherence scanning interferometer according to any one of the preceding claims, **characterised in that** the focus detector (16) is the measuring detector (10).

11. Coherence scanning interferometer according to any one of the preceding claims, **characterised in that** the coherence scanning interferometer has at least one optical, semi-transparent measuring light mirror (6) which is configured and arranged in the beam path of the coherence scanning interferometer in such a way that light emitted by the measuring light source is coupled into the beam path of the interferometer via the measuring light mirror (6).

12. Coherence scanning interferometer according to claim 3 and claim 11, **characterised in that** the measuring light mirror (6) is arranged between the main lens and the measuring detector (10).

**13.** Coherence scanning interferometer according to any one of the preceding claims, **characterised in that** the coherence scanning interferometer has at least one optical, semi-transparent reference light deflecting mirror and an optical reference mirror (13) which are configured and arranged in the beam path of the coherence scanning interferometer in such a way that light emitted by the measuring light source is imaged onto the reference mirror (13) via the measuring light deflection mirror; preferably, the beam splitter (6) is the reference light deflection mirror.

**14.** Method of locating a measuring position of a coherence scanning interferometer, preferably in accordance with any one of the preceding claims, wherein a measuring beam (17) generated by a measuring light source is split into a measuring beam and a reference beam (18) by means of an interferometer, the measuring beam (17) is imaged two-dimensionally onto an object (7) and the measuring beam (17) at least partly reflected and/or scattered by the object (7) is superposed with the reference beam (18) on a detection surface of a measuring detector in such a way that the superposed measuring beam and reference beam (18) two-dimensionally overlap a multiplicity of photosensors of a detection surface of a measuring detector, wherein the optical path length of the measuring beam is changed by means of an optical path-length-changing unit, wherein the object arranged in the image plane of the measuring detector (10) is imaged onto the detection surface with an imaging depth of field, **characterised in that** a focussing beam (19) generated by a focussing light source (1) is imaged with a focussing depth of field two-dimensionally onto the object (7) arranged in the image plane of the measuring detector and the focussing beam (19) at least partly reflected and/or scattered by the object (7) is imaged onto a focus detector (16), wherein the focussing depth of field is smaller than the imaging depth of field and, in dependence upon measurement signals of the focus detector, the optical path length of the focussing beam and the measuring beam is simultaneously changed by means of the optical wavelength unit in such a way that the focussing beam (19) is focussed approximately on the object (7), and the measuring beam (17) and the focussing beam (19) are imaged onto the object (7) via a common optical main lens (15); preferably, the imaging of the object onto the measuring detector (10) is effected with a numerical aperture $A_{N,O}$ and the imaging of the focussing light source (1) onto the object (7) arranged in the image plane of the measuring detector is effected with a numerical aperture $A_{N,F}$, the aperture $A_{N,O}$ being smaller than the aperture $A_{N,F}$.

**15.** Method of locating a measuring position of a coherence scanning interferometer according to claim 14, **characterised in that** the aperture $A_{N,O}$ is smaller by at least a factor of 2, preferably smaller by at least a factor of 5, than the aperture $A_{N,F}$.

**Revendications**

**1.** Interféromètre à balayage de cohérence pour la mesure optique à résolution spatiale des données géométriques de hauteur d'un objet, comprenant une unité de changement de longueur de trajet optique, une source de lumière de mesure (11), un interféromètre et un détecteur de mesure (10) ayant une surface de détection, laquelle surface de détection présente une pluralité de photocapteurs à des positions différentes, dans lequel l'interféromètre est conçu pour coopérer avec la source de lumière de mesure (11) et le détecteur de mesure (10) de telle sorte qu'un faisceau de sortie produit par la source de lumière de mesure (11) soit divisé au moyen d'un diviseur de faisceau (6) de l'interféromètre à balayage de cohérence en un faisceau de mesure et un faisceau de référence (18), le faisceau de mesure (17) est reproduit en surface sur un plan image du détecteur de mesure qui forme le plan image de l'interféromètre à balayage de cohérence, de sorte que, dans une position de mesure avec l'objet disposé dans le plan de mesure, le faisceau de mesure (17) atteint l'objet (7) en surface et le faisceau de mesure (17) au moins partiellement réfléchi et/ou diffusé par l'objet (7) est à nouveau couplé dans le trajet de faisceau de l'interféromètre et reproduit sur la surface de détection du détecteur de mesure (10) et superposé avec le faisceau de référence (18) de telle sorte que les faisceaux de mesure et de référence (18) superposés recouvrent en surface la pluralité de photocapteurs, l'unité de changement de longueur de trajet optique étant conçue pour changer la distance entre l'objet et le plan de mesure et l'interféromètre à balayage de cohérence étant conçu pour reproduire l'objet disposé dans le plan de mesure sur la surface de détection avec une profondeur de champ de reproduction, **caractérisé en ce que** l'interféromètre à balayage de cohérence comprend en outre une source de lumière de focalisation (1), laquelle source de lumière de focalisation (1) est conçue pour coopérer avec l'interféromètre à balayage de cohérence de telle sorte qu'un faisceau de focalisation (19) émis par la source de lumière de focalisation (1) soit reproduit avec une profondeur de champ de focalisation par le séparateur de faisceau (6) dans un plan image de la source de lumière de focalisation, lequel plan image de la source de lumière de focalisation est identique au plan image du détecteur de mesure (10) et forme le plan de mesure de l'interféromètre à balayage de cohérence, et que le faisceau de focalisation au moins partiellement réfléchi et/ou diffusé par l'objet (7) soit reproduit sur un détecteur de focalisation (16),

la profondeur de champ de focalisation étant inférieure à la profondeur de champ de reproduction, et que l'interféromètre comprend une lentille optique principale (5) qui est disposée dans le trajet de faisceau de l'interféromètre de telle sorte qu'au moins le faisceau de mesure (17) au moins partiellement réfléchi et/ou diffusé par l'objet (7) disposé dans le plan image du détecteur de mesure soit reproduit au moins par la lentille principale (5) sur les photocapteurs du détecteur de mesure, et que la source de lumière de focalisation (1) est disposée dans le trajet de faisceau de l'interféromètre à balayage de cohérence de telle sorte que le faisceau de focalisation soit reproduit sur l'objet (7) par au moins une lentille de focalisation optique de telle sorte que l'objet soit reproduit sur le détecteur de mesure (10) avec une ouverture numérique $A_{N,O}$ et la source de lumière de focalisation (1) reproduite sur l'objet (7) avec une ouverture numérique $A_{N,F}$, l'ouverture $A_{N,O}$ étant plus petite que l'ouverture $A_{N,F}$.

2. Interféromètre à balayage de cohérence selon la revendication 1,
**caractérisé en ce**
**que** la profondeur de champ de focalisation est inférieure à la profondeur de champ de reproduction d'au moins un facteur 10, de préférence d'au moins un facteur 50, plus préférentiellement d'au moins un facteur 100.

3. Interféromètre à balayage de cohérence selon l'une des revendications précédentes,
**caractérisé en ce**
**que** la profondeur de champ de focalisation est inférieure à 500 $\mu$m, de préférence inférieure à 100 $\mu$m, en particulier inférieure à 50 $\mu$m.

4. Interféromètre à balayage de cohérence selon l'une des revendications précédentes,
**caractérisé en ce**
**que** l'interféromètre à balayage de cohérence est conçu pour reproduire la source de lumière de focalisation (1) avec une ouverture $A_{N,F}$ dans le plan image du détecteur de mesure, la formule suivante s'appliquant :

$$\frac{\lambda_F}{A_{N,F}^2} \leq c \cdot l_{C,M}$$

avec une longueur d'onde principale $\lambda_F$ de la source de lumière de focalisation, une longueur de cohérence $l_{C,M}$ de la source de lumière de mesure (11) et un facteur $c$, le facteur $c$ étant supérieur à 0 et inférieur à 100, de préférence, le facteur $c$ se situant dans la plage de 1 à 90, en particulier dans la plage de 10 à 80.

5. Interféromètre à balayage de cohérence selon l'une des revendications précédentes,
**caractérisé en ce**
**que** l'ouverture $A_{N,O}$ est plus petite que l'ouverture $A_{N,F}$ d'au moins un facteur 2, de préférence plus petite d'au moins un facteur 5, en particulier
**qu'**au moins une partie d'une optique de reproduction de l'interféromètre à balayage de cohérence reproduit aussi bien l'objet sur le détecteur de mesure (10) que la source de lumière de focalisation (1) sur l'objet (7), en particulier
**que** la lentille de focalisation optique est la lentille principale (5), de préférence que l'ouverture $A_{N,F}$ est d'au moins 80 %, de préférence d'au moins 90 %, plus préférentiellement d'environ 100 % de la pleine ouverture de la lentille principale (5).

6. Interféromètre à balayage de cohérence selon l'une des revendications précédentes,
**caractérisé en ce**
**que** l'interféromètre à balayage de cohérence présente au moins un miroir de lumière de focalisation (4) semi-transparent qui est conçu et disposé dans le trajet de faisceau de l'interféromètre à balayage de cohérence de telle sorte que la lumière émise par la source de lumière de focalisation (1) soit couplée dans le trajet de faisceau de l'interféromètre par le miroir de lumière de focalisation (4), de préférence que le miroir de lumière de focalisation (4) est disposé dans le trajet de faisceau du faisceau de mesure entre l'objet (7) et le détecteur de mesure (10), en particulier que l'interféromètre à balayage de cohérence est conçu selon la revendication 3 et le miroir de lumière de focalisation (4) est disposé dans le trajet de faisceau du faisceau de mesure entre la lentille principale et le détecteur de mesure (10), en particulier
**que** le miroir de lumière de focalisation (4) est un miroir sélectif en longueur d'onde qui est conçu partiellement transparent pour une longueur ou une plage de longueurs d'onde de la source de lumière de focalisation (1) et essentiellement transparent en dehors de cette longueur d'onde ou cette plage de longueurs d'onde.

7. Interféromètre à balayage de cohérence selon l'une des revendications précédentes,
**caractérisé en ce**
**que** la source de lumière de focalisation (1) présente une longueur d'onde différente de celle de la source de lumière de mesure (11) et/ou une plage de longueurs d'onde essentiellement différente de celle de la source de lumière de mesure, de préférence que la source de lumière de focalisation (1) et la source de lumière de mesure sont conçues avec un espacement de longueurs d'onde d'au moins 20 nm, de préférence d'au moins 25 nm, plus préférentiellement d'au moins 50 nm.

8. Interféromètre à balayage de cohérence selon l'une des revendications précédentes,
**caractérisé en ce
que** le plan image de la reproduction optique de la source de lumière de focalisation (1) correspond au plan image côté objet de la reproduction optique du détecteur de mesure.

9. Interféromètre à balayage de cohérence selon l'une des revendications précédentes,
**caractérisé en ce
que** la source de lumière de focalisation (1) présente une extension latérale inférieure à 0,5 mm, en particulier que la source de lumière de focalisation (1) est conçue sous la forme d'une source de lumière ponctuelle et/ou d'une source de lumière comprenant un diaphragme de lumière de focalisation (2).

10. Interféromètre à balayage de cohérence selon l'une des revendications précédentes,
**caractérisé en ce
que** le détecteur de focalisation (16) est le détecteur de mesure (10).

11. Interféromètre à balayage de cohérence selon l'une des revendications précédentes,
**caractérisé en ce
que** l'interféromètre à balayage de cohérence présente au moins un miroir de lumière de mesure (6) optique partiellement transparent qui est conçu et disposé dans le trajet de faisceau de l'interféromètre à balayage de cohérence de telle sorte que la lumière émise par la source de lumière de mesure soit couplée dans le trajet de faisceau de l'interféromètre par le miroir de lumière de mesure (6).

12. Interféromètre à balayage de cohérence selon la revendication 3 et la revendication 11,
**caractérisé en ce
que** le miroir de lumière de mesure (6) est disposé entre la lentille principale et le détecteur de mesure (10).

13. Interféromètre à balayage de cohérence selon l'une des revendications précédentes,
**caractérisé en ce
que** l'interféromètre à balayage de cohérence présente au moins un miroir de déviation de lumière de référence optique partiellement transparent et un miroir de référence optique (13) qui sont conçus et disposés dans le trajet de faisceau de l'interféromètre à balayage de cohérence de telle sorte que la lumière émise par la source de lumière de mesure soit reproduite sur le miroir de référence (13) par le miroir de déviation de lumière de mesure, de préférence que le diviseur de faisceau (6) est le miroir de déviation de lumière de référence.

14. Procédé pour trouver une position de mesure d'un interféromètre à balayage de cohérence, de préférence selon l'une des revendications précédentes, dans lequel un faisceau de mesure (17) produit par une source de lumière de mesure est divisé au moyen d'un interféromètre en un faisceau de mesure et un faisceau de référence (18), le faisceau de mesure (17) est reproduit en surface sur un objet (7) et le faisceau de mesure (17) au moins partiellement réfléchi et/ou diffusé par l'objet (7) est superposé avec le faisceau de référence (18) sur une surface de détection d'un détecteur de mesure de telle sorte que les faisceaux de mesure et de référence (18) superposés recouvrent en surface une pluralité de photocapteurs d'une surface de détection d'un détecteur de mesure,
la longueur du trajet optique du faisceau de mesure étant changée au moyen d'une unité de changement de longueur de trajet optique,
l'objet disposé dans le plan image du détecteur de mesure (10) étant reproduit sur la surface de détection avec une profondeur de champ de reproduction,
**caractérisé en ce
qu'**un faisceau de focalisation (19) produit par une source de lumière de focalisation (1) avec une profondeur de champ de focalisation est reproduit en surface sur l'objet (7) disposé dans le plan image du détecteur de mesure et le faisceau de focalisation (19) au moins partiellement réfléchi et/ou diffusé par l'objet (7) est reproduit sur un détecteur de focalisation (16), la profondeur de champ de focalisation étant inférieure à la profondeur de champ de reproduction, et la longueur du trajet optique du faisceau de focalisation et du faisceau de mesure étant changée simultanément au moyen de l'unité de changement de longueur de trajet optique en fonction des signaux de mesure du détecteur de focalisation de telle sorte que le faisceau de focalisation (19) soit focalisé approximativement sur l'objet (7), et
**que** le faisceau de mesure (17) et le faisceau de focalisation (19) sont reproduits sur l'objet (7) par une lentille optique principale commune (5), de préférence que l'objet est reproduit sur le détecteur de mesure (10) avec une ouverture numérique $A_{N,O}$ et la source de lumière de focalisation (1) reproduite sur l'objet (7) disposé dans le plan image du détecteur de mesure avec une ouverture numérique $A_{N,F}$, l'ouverture $A_{N,O}$ étant plus petite que l'ouverture $A_{N,F}$.

15. Procédé pour trouver une position de mesure d'un interféromètre à balayage de cohérence selon la revendication 14,
   **caractérisé en ce**
   **que** l'ouverture $A_{N,O}$ est plus petite que l'ouverture $A_{N,F}$ d'au moins un facteur 2, de préférence d'au moins un facteur 5.

Figur 1

$A_{N,F}$

$A_{N,O}$

Figur 2

Figur 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005023212
- US 5493109 A
- US 20090219544 A1
- US 5886786 A
- US 20090153839 A
- JP 2001141652 B